# EUROPÄISCHE PATENTANMELDUNG

(11) **EP 1 035 296 A2**
(43) Veröffentlichungstag der Anmeldung: **13.09.2000**
(21) Anmeldenummer: 00105154.9
(22) Anmeldetag: 10.03.2000
(51) Int. Cl.: E06B 7/16, E05B 9/00, E05B 17/00

(54) **Beschlag für Türen, Fenster und dergleichen**

(30) Priorität: 10.03.1999 DE 29904378 U
(71) Anmelder: Steinbach & Vollmann GmbH & Co., 42579 Heiligenhaus (DE)
(72) Erfinder: Manteca, Peter, 46047 Oberhausen (DE)
(74) Vertreter: Stenger, Watzke & Ring Patentanwälte

(57) **Zusammenfassung**

Ein Beschlag für Türen, Fenster und dgl. Schließelemente, insbesondere Außenbeschläge für Schaltschranktüren, ist mit mindestens einer auf dem Schließelement angeordneten Grundplatte (3) aus Kunststoff mit mindestens einer an der Unterseite (3b) der Grundplatte angeordneten Dichtung (9) versehen. Zur Erzielung einer einfach und kostengünstig herstellbaren Dichtung wird vorgeschlagen, daß die Dichtung (9) aus Kunststoff und insbesondere einem daurerelastischen Kunststoff besteht, und die Dichtung ferner einstückig an das Material der Grundplatte (3) angespritzt ist.

## Beschreibung

Die Erfindung betrifft einen Beschlag für Türen, Fenster und dgl. Schließelemente, insbesondere Außenbeschläge für Schaltschranktüren, mit mindestens einer auf dem Schließelement angeordneten Grundplatte aus Kunststoff mit mindestens einer an der Unterseite der Grundplatte angeordneten Dichtung.

Ein Türbeschlag der eingangs genannten Art ist beispielsweise aus der DE-U1-G 94 06 584 bekannt. Da mit derartigen Beschlägen versehene Schließelemente häufig im Außenbereich Anwendung finden, ist es notwendig, daß der Übergangsbereich Beschlag-Schließelement wetterfest abgedichtet ist, um ein Eindringen von Feuchtigkeit und Schmutz in den von dem Schließelement verschlossenen Raum zu verhindern. Zu diesem Zweck ist es aus der Praxis bekannt, auf der Unterseite der Grundplatte des Beschlags mindestens eine Dichtung anzuordnen. Bei den herkömmlichen Beschlägen besteht die Dichtung aus einem in eine Nut eingesetzten O-Ring. Die Verwendung dieser O-Ringe stellt zwar eine ausreichende Abdichtung gegenüber dem Schließelement dar, jedoch bedeutet einerseits das Anordnen des O-Rings auf der Unterseite der Grundplatte des Beschlags einen zusätzlichen kostenintensiven Arbeitsschritt und besteht andererseits die Gefahr, daß bei der Montage oder Demontage des Beschlags der als separates Bauteil ausgebildete Dichtungsring verrutscht oder verloren geht.

Bei dem aus der DE-U1-G 94 06 584 bekannten Türbeschlag ist die Dichtung als in eine Nut auf der Unterseite der Grundplatte eingeschäumte und über die Nut vorstehende Dichtungswulst aus einem Kunststoffschaum ausgebildet. Diese Art der Ausbildung ermöglicht zwar eine unverrückbare Verbindung zwischen Dichtung einerseits und Grundplatte des Beschlags andererseits, jedoch stellt das Ausschäumen der Nut mit dem Kunststoffschaum einen zusätzlichen zeit- und kostenintensiven Arbeitsschritt dar. Darüber hinaus ist es bei der Ausbildung dieser geschäumten Dichtung notwendig, den solchermaßen mit dem Dichtungswulst versehenen Beschlag zum Austrocknen und Abbinden des Kunststoffschaums mehrere Stunden ruhen zu lassen, bevor die solchermaßen mit einer Dichtung versehenen Beschläge weiterverarbeitet werden können, ohne die Dichtung zu beschädigen oder zu zerstören.

Ausgehend von diesem Stand der Technik liegt der Erfindung die **Aufgabe** zugrunde, einen Beschlag für Türen, Fenster und dergleichen Schließelemente der eingangs genannten Art derart weiterzuentwickeln, daß die an der Grundplatte anzuordnende Dichtung einfach und kostengünstig herstellbar ist.

Die **Lösung** dieser Aufgabenstellung ist erfindungsgemäß dadurch gekennzeichnet, daß die Dichtung aus Kunststoff, insbesondere einem dauerelastischen Kunststoff, besteht und einstückig an das Material der Grundplatte angespritzt ist.

Mit dieser Art der Ausbildung der Dichtung für den Beschlag ist es erstmalig möglich sowohl die Dichtung als auch das Material der Grundplatte des Beschlags einstückig auszubilden. Somit bedarf es keines separaten Arbeitsschrittes zur Anordnung der Dichtung auf der Grundplatte. Statt dessen wird das Kunststoffmaterial der Dichtung nach dem Herstellen der Grundplatte direkt in derselben Maschine an die Grundplatte angespritzt, so daß sich eine stoffschlüssige Verbindung der beiden aneinander gespritzten Kunststoffe ergibt. Während die Grundplatte des Beschlags beispielsweise aus einem harten und schlagfesten Kunststoff besteht, ist es für die Dichtwirkung der angespritzten Dichtung vorteilhaft, wenn diese aus einem dauerelastischen Kunststoff besteht.

Zur Anordnung der Dichtung auf der Unterseite der Grundplatte wird erfindungsgemäß vorgeschlagen, daß diese zumindest teilweise in einer Nut verlaufend ausgebildet ist. Durch die Anordnung der Dichtung in einer Nut wird die beiderseitige Kontaktfläche zwischen den aneinander gespritzten Kunststoffen der Grundplatte und der Dichtung vergrößert.

Der Verbund zwischen Grundplatte und angespritzter Dichtung kann dadurch gesteigert werden, daß in der Nut Hinterschneidungen ausgebildet sind, die von dem an die Grundplatte angespritzten Dichtungsmaterial hintergriffen werden.

Um die Steifigkeit einer solchermaßen ausgebildeten Dichtung zu erhöhen und zu verhindern, daß beim Festziehen von Beschlag und Schließelement die Dichtung zwischen der Grundplatte und dem Schließelement herausgedrückt wird, wird gemäß einer praktischen Ausführungsform der Erfindung vorgeschlagen, daß die Dichtung auf mindestens einen in dem Material der Grundplatte ausgebildeten Steg aufgespritzt ist. Dieser dreiseitig von dem aufgespritzten Kunststoffmaterial umgebende Steg bildet somit eine in die Dichtung eingebettete Versteifungs- bzw. Stabilisierungsrippe.

Schließlich wird mit der Erfindung vorgeschlagen, daß die Dichtung an einen die Unterseite der Grundplatte umgebenden Rand angespritzt ist. Durch dieses einseitige Anspritzen an den Rand der Grundplatte wird die Dichtung einseitig abgestützt, so daß diese beim Befestigen der Grundplatte an dem Schließelement unverrückbar in der ordnungsgemäßen Lage verbleibt.

Weitere Merkmale und Vorteile der Erfindung ergeben sich aus der nachfolgenden Beschreibung der zugehörigen Zeichnung, in der ein Ausführungsbeispiel eines erfindungsgemäßen Beschlags für Türen, Fenster und dgl. Schließelemente dargestellt ist. In der Zeichnungen zeigt:
- Fig. 1: eine schematische Montagezeichnung für das Befestigen eines Türbeschlags an einem Türblatt;
- Fig. 2: eine Ansicht der Grundplatte des Beschlags gemäß Fig. 1 von unten;
- Fig. 3: einen vergrößerten Schnitt entlang der Schnittlinie III-III gemäß Fig. 2 und
- Fig. 4: eine vergrößerte Detailansicht des Ausschnitts IV gemäß Fig. 1.

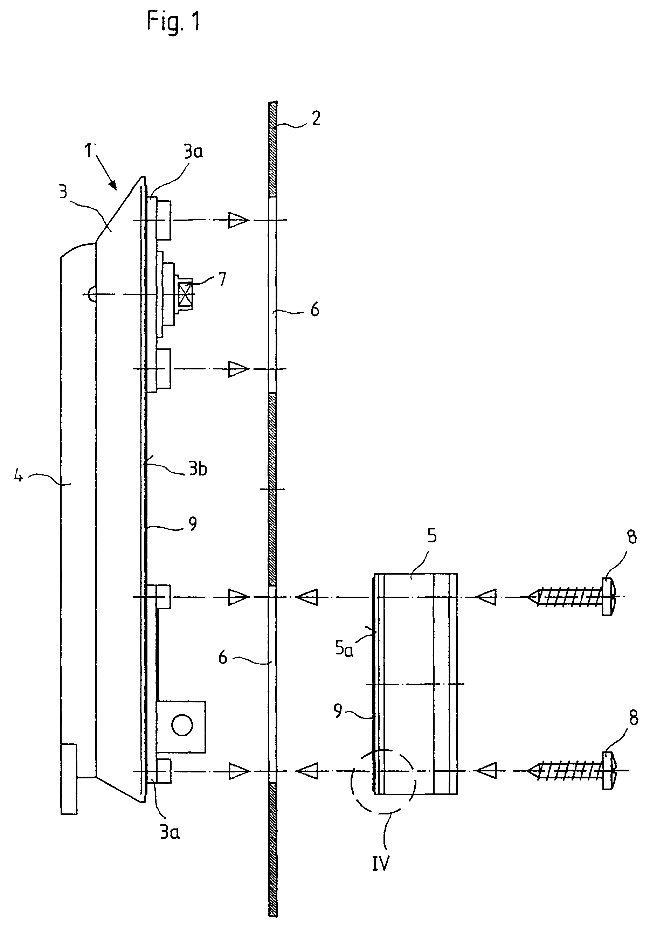

Der in Fig. 1 dargestellte, als Türbeschlag 1 ausgebildete Beschlag besteht aus einer auf der Außenseite eines Türblatts 2 anzuordnenden Grundplatte 3, einer in der Grundplatte 3 gelagerten Handhabe 4 sowie einer von der Innenseite auf das Türblatt 2 aufsetzbaren Abdeckkappe 5.

Zur Betätigung eines nicht dargestellten Verriegelungsmechanismusses über die Handhabe 4 des Türbeschlags 1 sowie zum Verriegeln der Handhabe 4 sind in dem dargestellten Türblatt 2 zwei Durchbrüche 6 ausgebildet. Der in der Abbildung Fig. 1 dargestellte obere Durchbruch 6 dient zur Betätigung des Verriegelungsmechanismusses über die Handhabe 4. Zur Betätigung des Verriegelungsmechanismusses ist am schwenkbar in der Grundplatte 3 gelagerten Ende der Handhabe 4 ein Vierkant 7 angeordnet, über den beispielsweise das Getriebe eines Verriegelungsmechanismusses beim Verdrehen der Handhabe 4 antreibbar ist.

Der zweite Durchbruch 6 im Türblatt 2 dient zur Aufnahme eines - nicht dargestellten - Zylinderschlosses, über das die Handhabe 4 in der dargestellten eingeschwenkten Stellung in der Grundplatte 3 fixiert werden kann. Die auf das das Türblatt 2 durchragende Zylinderschloß aufsetzbare Abdeckkappe 5 dient dazu, das Zylinderschloß vor Umwelteinflüssen und Manipulationen zu sichern.

Wie weiterhin aus Fig. 1 ersichtlich, erfolgt das Festlegen des Türbeschlags 1 an dem Türblatt 2 in der dargestellten Ausführungsform über Schrauben 8, die die Abdeckkappe 5 einerseits und die Grundplatte 3 andererseits im auf das Türblatt 2 aufgesetzten Zustand gegeneinander verspannen. Eine ähnliche Befestigung ist auch im Bereich des Durchbruches 6 für den Antrieb des Verriegelungsmechanismusses möglich.

Da solche Türbeschläge 1 beispielsweise beim Einsatz als Außenbeschläge für Schaltschranktüren im Außenbereich eingesetzt werden und somit jeglichen Witterungseinflüssen ausgesetzt sind, ist es notwendig, den Türbeschlag 1 gegenüber dem Türblatt 2 abzudichten, um das Eindringen von Feuchtigkeit und/oder Schmutz über die Durchbrüche 6 in das Innere des über das Türblatt 2 zu verschließenden Raumes zu verhindern. Zu diesem Zweck ist auf der Unterseite 3b der Grundplatte 3 eine Dichtung 9 angeordnet. Ebenso ist auf der dem Türblatt 2 zugewandten Unterseite 5a der Abdeckkappe 5 eine Dichtung 9 angeordnet, so daß der Durchbruch 6 vollständig gegenüber der Umgebung abgedichtet ist.

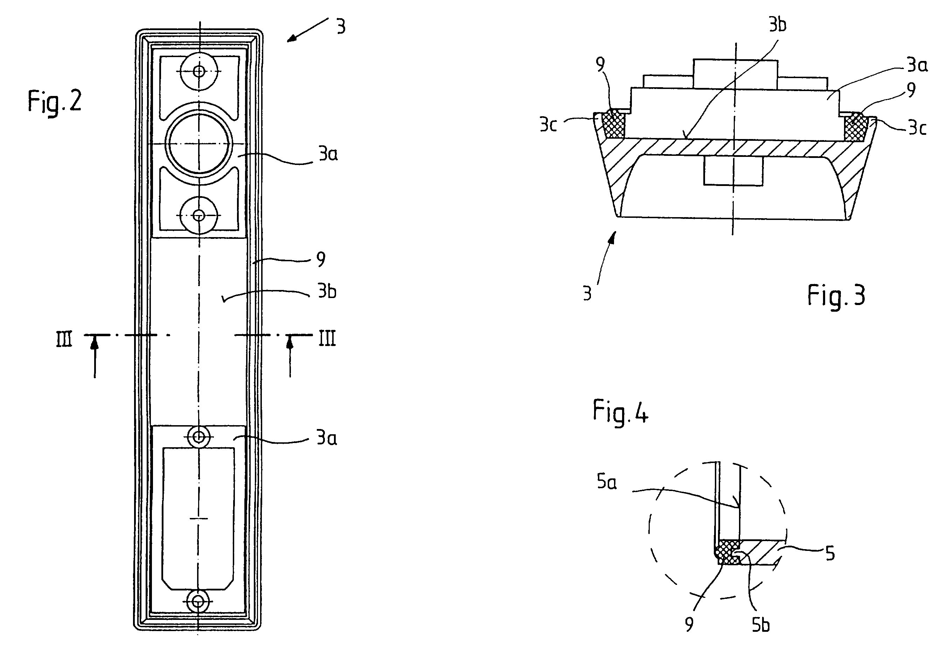

Die in Fig. 2 dargestellte Unterseite 3b der Grundplatte 3 zeigt den genauen Verlauf der Dichtung 9 entlang einem an der Unterseite 3b der Grundplatte 3 angeordneten umlaufendem Rand 3c.

Der Schnittdarstellung gemäß Fig. 3 ist im Querschnitt der Aufbau der Grundplatte 3 sowie die Anordnung der Dichtung 9 auf der Unterseite 3b der Grundplatte 3 zu entnehmen.

Um eine einfach und kostengünstig zu fertigende Dichtung 9 bereitzustellen, die lagegenau und lagesicher an der Unterseite 3b der Grundplatte 3 anzuordnen ist ist die dargestellte Dichtung 9 als an das Material der Grundplatte 3 einstückig angespritzte Dichtung 9 ausgebildet. Während als Material für die Grundplatte 3 des Türbeschlags 1 in der Regel ein harter und schlagfester Kunststoff verwendet wird, besteht die einstückig mit der Grundplatte 3 ausgebildete Dichtung 9 vorteilhafterweise aus einem dauerelastischen Kunststoff.

Die Herstellung von Grundplatte 3 und Dichtung 9 erfolgt taktweise in ein und derselben Spritzgußmaschine. Während im ersten Arbeitsschritt die Grundplatte 3 aus dem harten Kunststoff gespritzt wird, wird im direkt nachfolgenden Schritt auf das noch nicht erkaltete Material der Grundplatte 3 der Kunststoff der Dichtung 9 aufgespritzt, so daß sich eine einstückige formschlüssige Verbindung zwischen den beiden Kunststoffmaterialien der Grundplatte 3 und der Dichtung 9 ergibt.

Fig. 3 zeigt eine besonders vorteilhafte Anordnung der Dichtung 9 an der Unterseite 3b der Grundplatte 3. Durch das Anspritzen der Dichtung 9 an den Rand 3c der Grundplatte 3 wird die Dichtung 9 seitlich stabilisiert, so daß beim Festlegen der Grundplatte 3 am Türblatt 2 nicht die Gefahr besteht, daß beim Anziehen der Schrauben 8 die Dichtung 9 zwischen der Unterseite 3b der Grundplatte 3 und der Außenseite des Türblatts 2 herausgedrückt wird.

Eine weitere Möglichkeit, die Dichtung 9 zu stabilisieren ist in der Detailansicht gemäß Fig. 4 dargestellt. Bei dieser dargestellten Ausführungsform ist die an die Unterseite 5a der Abdeckkappe 5 einstückig angespritzte Dichtung 9 auf einen Steg 5b aufgespritzt, der in das Material der Dichtung 9 eingebettet als Versteifungs- oder Stabilisierungsrippe dient.

Durch die dargestellte einstückige Ausbildung von Grundplatte 3 des Beschlags und Dichtung 9 wird eine besonders einfache und kostengünstige Art der Abdichtung eines auf einem Schließelement anzuordnenden Beschlags ermöglicht. Neben den fertigungstechnischen Vorteilen der einstückigen Ausbildung von Dichtung 9 und Beschlagkörper ergibt ist ein Montagevorteil, da durch das einstückige Anformen der Dichtung 9 diese immer lagegenau und unverrückbar lagesicher auf der abzudichtenden Fläche des Beschlags angeordnet ist. Darüber hinaus ist ein solchermaßen direkt mit der Dichtung 9 hergestellter Beschlag direkt nach der Entnahme aus der Spritzgußmaschine ohne nachfolgenden Bearbeitungsgang zur Anordnung der Dichtung 9 weiterverarbeitbar.

### Bezugszeichenliste

- 1: Türbeschlag
- 2: Türblatt
- 3: Grundplatte
- 3a: Zentrieransatz
- 3b: Unterseite
- 3c: Rand
- 4: Handhabe
- 5: Abdeckkappe
- 5a: Unterseite
- 5b: Steg
- 6: Durchbruch
- 7: Vierkant
- 8: Schrauben
- 9: Dichtung

## Patentansprüche

1. Beschlag für Türen, Fenster und dgl. Schließelemente, insbesondere Außenbeschläge für Schaltschranktüren, mit mindestens einer auf dem Schließelement angeordneten Grundplatte (3) aus Kunststoff mit mindestens einer an der Unterseite (3b) der Grundplatte (3) angeordneten Dichtung (9),
**dadurch gekennzeichnet,**
daß die Dichtung (9) aus Kunststoff, insbesondere einem dauerelastischen Kunststoff, besteht und einstückig an das Material der Grundplatte (3) angespritzt ist.

2. Beschlag nach Anspruch 1, dadurch gekennzeichnet, daß die Dichtung (9) zumindest teilweise in einer Nut verlaufend ausgebildet ist.

3. Beschlag nach Anspruch 2, dadurch gekennzeichnet, daß in der Nut Hinterschneidungen ausgebildet sind.

4. Beschlag nach Anspruch 1 oder 2, dadurch gekennzeichnet, daß die Dichtung (9) auf mindestens einen in dem Material der Grundplatte (3) ausgebildeten Steg (5b) aufgespritzt ist.

5. Beschlag nach Anspruch 1, dadurch gekennzeichnet, daß die Dichtung (9) an einen die Unterseite (3b) der Grundplatte (3) umgebenden Rand (3c) angespritzt ist.
